# NEUE EUROPÄISCHE PATENTSCHRIFT

(11) **EP 0 160 321 B2**
(45) Veröffentlichungstag und Bekanntmachung des Hinweises auf die Entscheidung über den Einspruch: **04.08.1993**
(45) Hinweis auf die Patenterteilung: 08.08.1990
(21) Anmeldenummer: 85105406.4
(22) Anmeldetag: 03.05.1985
(51) Int. Cl.: A01C 17/00

(54) **Schleuderstreuer**
Fertilizer broadcaster
Distributeur d'engrais centrifuge

(30) Priorität: 04.05.1984 DE 3416500
(43) Veröffentlichungstag der Anmeldung: 06.11.1985
(73) Patentinhaber: Amazonen-Werke H. Dreyer GmbH & Co. KG, D-49202 Hasbergen (DE)
(72) Erfinder: Dreyer, Heinz, Dr., D-4507 Hasbergen (DE)
(74) Vertreter: Grünecker, Kinkeldey, Stockmair & Schwanhäusser Anwaltssozietät

(56) Entgegenhaltungen:
- WO-A-88/09609
- DE-A- 2 628 553
- DE-A- 2 805 897
- DE-A- 2 818 227
- DE-A- 2 913 738
- DE-A- 3 331 169
- DE-A- 3 337 813
- DE-A- 3 541 415
- DE-B- 2 835 011
- DE-B- 3 008 402
- FR-A- 2 336 069
- GB-A- 977 308
- GB-C- 585 733
- US-A- 3 394 892
- Prospekte Niemeyer; Rauch Komet ZSN und ZSB; Rauch Delta

## Beschreibung

Die Erfindung bezieht sich auf einen Schleuderstreuer, nach dem Oberbegriff des Anspruchs 1. Ein derartiger Steuer ist aus der GB-C- 694 198 bekannt. Ein anderer Schleudersteuer ist aus der DE-PS 28 18 227 bekannt. Die Antriebswelle jeder Schleuderscheibe ragt in den Vorratssbehälter hinein und trägt an ihrem im Vorratsbehälter angeordneten Wellenende Rührköpfe, deren Drehung das Ausbringen des Düngemittels durch die Auslauföffnung im Vorratsbehälter unterstützt. Ein die Schleuderscheiben antreibendes Getriebe mit den Antriebswellen ist am Rahmen des Schleuderstreuers nach unten in eine Stellung wegschwenkbar befestigt, in welcher die Antriebswellen vollständig und soweit außerhalb des Vorratsbehälters angeordnet sind, daß die Schleuderscheiben in axialer Richtung abgezogen und gegen andere ausgetauscht werden können. Allerdings können die Antriebswellen erst dann aus dem Vorratsbehälter herausgeschwenkt werden, wenn dieser zuvor völlig entleert und die Rührköpfe von den Antriebswellen entfernt worden sind. Das Auswechseln der Schleuderscheiben erfordert somit bei diesem bekannten Schleuderstreuer einen unerwünscht hohen Zeit- und Konstruktionsaufwand. Außerdem ist bei der Durchführung des sogenannten Abdrehvorganges zur Ermittlung der bei der jeweils eingestellten Größe der Auslauföffnung austretenden Menge des Düngemittels eine aufwendige Auffangvorrichtung erforderlich, um die mit großer Energie von den Wurfelementen der Schleuderscheibe abgeschleuderten Düngemittelteilchen auffangen zu können.

Aus der DE-PS 28 35 011 ist ein weiterer Schleuderstreuer der eingangs erwähnten Art bekannt, dessen Antriebswelle für die Schleuderscheibe unterhalb des Vorratsbehälters in einem derartigen Abstand von diesem endet, daß nach Drehen der Schleuderscheibe in eine bestimmte Stellung ausreichend Platz verbleibt, um sie in axialer Richtung von der Antriebswelle abzuziehen und gegen eine andere auszutauschen bzw. den Abdrehvorgang unter Verwendung eines einfachen Auffanggefäßes durchzuführen. Dieser bekannte Schleuderstreuer bietet somit außer der vereinfachten Durchführung des Abdrehvorganges den Vorteil eines vergleichsweise geringeren Zeitaufwandes für das Auswechseln der Schleuderscheiben, allerdings nur in einer bestimmten Stellung derselben. Hinzu kommt als weiterer Nachteil der beträchtlich höhere Konstruktionsaufwand für den Antrieb der Rührköpfe innerhalb des Vorratsbehälters mittels einer eigenen sich, horizontal in den Vorratsbehälter hinein erstrekkenden Antriebswelle.

Aus der DE-OS 26 28 553 ist eine Messerwelle für ein Schlegelmulchgerät bekannt, die als Hohlwelle ausgebildet ist. Die Hohlwelle besteht bei einer Lösung aus zwei halbschalenförmigen Teilen, die seitlich an die Achse angelegt und dann miteinander verbunden werden können. Bei einer anderen Lösung wird die Hohlwelle in axialer Richtung auf die Achse aufgeschoben und dann wird ein Form- bzw. Kraftschluß zwischen Achse- und Hohlwelle hergestellt.

Ausgehend von dem eingangs genannten Stand der Technik nach der GB-C-694 198 liegt der Erfindung die Aufgabe zugrunde, einen Schleuderstreuer der eingangs erwähnten Art so weiterzubilden, daß bei geringem Konstruktionsaufwand die Schleuderscheibe jederzeit und auf einfachere und schnellere Weise von der Antriebswelle abgenommen bzw. an dieser befestigt werden kann, ohne das Strenbild negativ zu beinträchtige

Dies wird erfindungsgemäß durch die Merkmale des Anspruchs 1 gelöst.

Infolge dieser Maßnahme können Schleuderstreuer sämtlicher Ausführungen, auch solcher, deren Schleuderscheiben überhaupt nicht in axialer Richtung abgezogen werden können, mit auswechselbaren Schleuderscheiben ausgerüstet werden. Der randoffene Schlitz ermöglicht bei jeder Stellung der Schleuderscheibe deren seitliches Abziehen von der Antriebswelle. Infolge dieses sehr einfach und sehr schnell durchführbaren seitlichen Abziehens anstelle des bisher üblichen axialen Abziehens der Schleuderscheibe können die Rührköpfe in konstruktiv einfachster Weise von der Artriebswelle für die Schleuderscheibe mit angetrieben werden, ohne daß sie vor dem Auswechseln der Schleuderscheibe von der Antriebswelle abgenommen werden müssen. Dies bedeutet, daß das Auswechseln der Schleuderscheibe auch bei gefülltem Vorratsbehälter, also jederzeit, vorgenommen werden kann.

Bei Verwendung eines einzigen randoffenen Schlitzes weist dieser eine Breite auf, die zur Durchführung des Auswechselns der Schleuderscheibe eine Verschiebung der Antriebswelle entlang dem Schlitz relativ zur Schleuderscheibe zuläßt. Gemäß einer Weiterbildung der Erfindung können jedoch auch zwei randoffene Schlitze verwendet werden, so daß die Schleuderscheibe zweigeteilt ist. In diesem Fall ist keine bestimmte Schlitzbreite erforderlich.

Vorzugsweise erstreckt sich jeder Schlitz in radialer Richtung, so daß derselbe die Schleuderscheibe nur über eine möglichst kurze Strecke unterbricht.

Gemäß der Erfindung ist jeder Schlitz in Drehrichtung der Schleuderscheibe einem Wurfelement gegenüber nachlaufend, vorzugsweise direk im Anschluß an das Wurfelement, angeordnet. Diese Anordnung stellt die Voraussetzung dafür dar, daß kein Düngemittel durch den Schlitz hindurchfallen kann. Dazu ist es lediglich erforderlich, die Höhe des Wurfelementes, die Drehgeschwindigkeit der Schleuderscheibe und die Breite des Schlitzes derart aufeinander abzustimmen, daß der aus der Auslauföffnung des Vorratsbehälters fallende Düngemittelstrom so knapp unterhalb der Auslauföffnung unterbrochen wird, daß die Fallzeit des anschließend herabfallenden Düngematerials bis zum Erreichen der Ebene der Schleuderscheibe größer ist als die Zeit, die der Schlitz zum Durchlaufen durch den Bereich unterhalb der Auslauföffnung benötigt.

Auch ist auf der Antriebswelle eine Nabe angeordnet, und die Schleuderscheibe mittels Schnellverschlüssen leicht lösbar mit der Nabe drehfest verbunden, wobei letztere und die Scheibe zwei selbständige Bauteile darstellen. Somit ist es möglich, die Schleuderscheibe ohne Werkzeug von der Nabe bzw. von der Antriebswelle zu lösen. Außerdem gawährleisten die Nabe und die Schnellverschlüsse eine sichere Befestigung der Schleuderscheibe. Vorzugsweise ist die Nabe als flacher tellerförmiger Flansch ausgebildet.

Bei einem Schleuderstreuer mit zwei angetriebenen Schleuderscheiben sind diese gemäß der Erfindung mit Hilfe von Schnellverschlüssen leicht lösbar an den Flanschen der Naben der Antriebswellen befestigt sein, wobei die Schnellverschlüsse der beiden Schleuderscheiben bzw. der Flansch jeweils derart angeordnet sein können, daß nur die jeweils zugehörige Schleuderscheibe auf dem entsprechenden Flansch befestigt ist.

Nachstehend ist die Erfindung anhand zweier Ausführungsbeispiele unter Bezugnahme auf die Zeichnung näher beschrieben. Hierbei zeigen:
Fig. 1 eine Rückansicht eines Schleuderstreuers gemäß einem ersten Ausführungsbeispiel der Erfindung,
Fig. 2 eine vergrößerte Darstellung der Schleuderscheiben des in Fig. 1 gezeigten Schleuderstreuers bei Betrachtung in Richtung der Pfeile IIll, und
Fig. 3 eine der Fig. 2 ähnliche Darstellung von Schleuderscheiben eines Schleuderstreuers gemäß einem zweiten Ausführungsbeispiel der Erfindung.

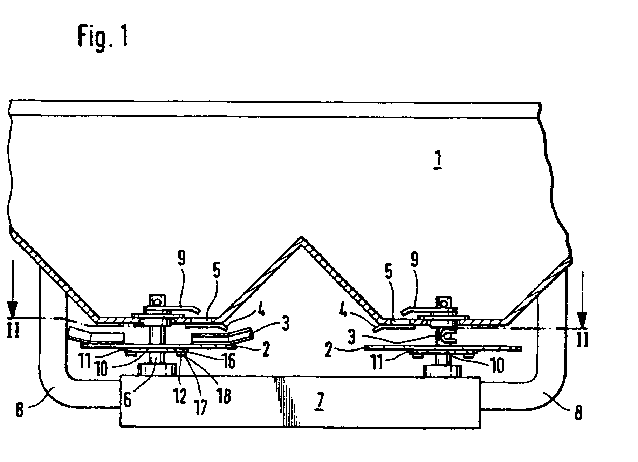

Der in Fig. 1 dargestellte Schleuderstreuer weist einen Vorratsbehälter 1 zur Aufnahme des auszustreuenden Gutes auf. Im Boden des Vorratsbehälters 1 sind zwei mit gegenseitigem Abstand angeordnete Auslauföffnungen 5 ausgebildet, die mittels Schiebern 4 verschließbar sind. Jeder Auslauföffnung 5 ist unterhalb derselben eine Schleuderscheibe 2 mit jeweils zwei Wurfelementen 3 zugeordnet. An einem Rahmen 8 des Schleuderstreuers ist ein Getriebe 7 angeordnet, welches über zwei Antriebswellen 6 die an diesen in noch zu beschreibender Weise befestigten Schleuderscheiben 2 im einander entgegengesetzten Drehsinn rotierend antreibt. Das Getriebe 7 wird von der Zapfwelle eines den Schleuderstreuer tragenden, hier nicht dargestellten Schleppers in bekannter Weise angetrieben. Die Antriebswellen 6 durchsetzen je eine im Zentrum der zugeordneten Schleuderscheibe 2 ausgebildete axiale Aufnahmeöffnung 13 und erstrecken sich weiter bis in den Vorratsbehälter 1 hinein. An ihren, innerhalb des Vorratsbehälters 1 angeordneten oberen Wellenenden tragen sie auswechselbar befestigte Rührköpfe 9.

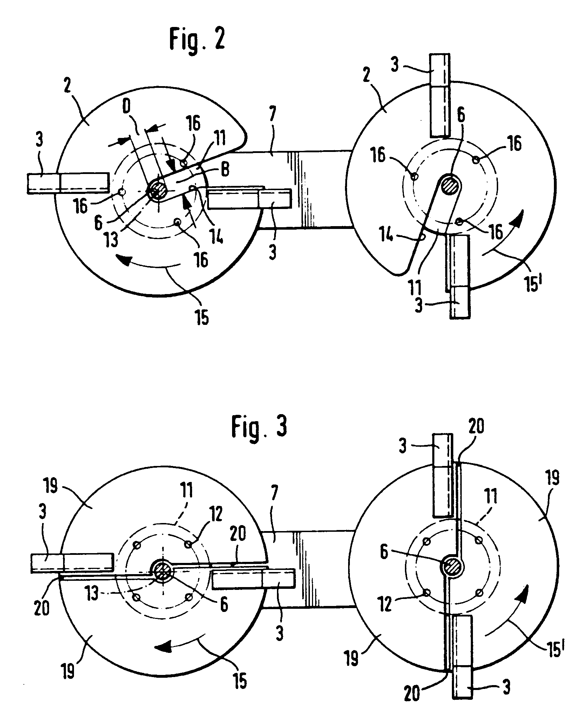

Wie in Fig. 2 dargestellt, ist in jeder Schleuderscheibe 2 ein randoffener Schlitz 14 ausgebildet, der von der axialen Aufnahmeöffnung 13 in radialer Richtung bis zum Scheibenrand verläuft. Die randoffenen Schlitze 14 weisen ebenso wie die axialen Aufnahmeöffnungen 13 eine Breite B bzw. einen Durchmesser auf, der etwas größer als der Durchmesser D der Antriebswelle 6 ist. Jeder randoffene Schlitz 14 ist in Drehrichtung 15 bzw. 15' der Schleuderscheiben 2 einem Wurfelement 3 gegenüber nachlaufend, und zwar unmittelbar anschließend an das Wurfelement, angeordnet.

Zur Befestigung der Schleuderscheiben 2 an den Antriebswellen 6 sind an den letzteren je eine als flacher, tellerförmiger Flansch 11 ausgebildete Nabe 10 drehfest angeordnet. Die beiden Schleuderscheiben 2 sind mittels je drei Schnellverschlüssen 12 drehfest und leicht lösbar mit je einem Flansch 11 verbunden. Jeder Schnellverschluß 12 besteht aus einem an der jeweiligen Schleuderscheibe 2 befestigten Bolzen 16, einem in dem jeweiligen Flansch 11 ausgebildeten Loch 17 zurAufnahme des Bolzens 16 und einem Federstecker 18.

Die Schnellverschlüsse 12 sind en den beiden Schleuderscheiben 2 bzw. an den Flanschen 11 mit unterschiedlichen gegenseitigen Abständen angeordnet, so daß nur die jeweils zugehörige Schleuderscheibe 2 auf dem entsprechenden Flansch 11 befestigt werden kann.

Zur Befestigung der Schleuderscheiben 2 an den Flanschen 11 werden erstere von der Seite her so an die jeweilige Antriebswelle 6 angesetzt, daß letztere in den randoffenen Schlitz 14 hineinragt. Sodann wird die jeweilige Schleuderscheibe 2 in Richtung des Schlitzes 14 soweit auf den Flansch 11 aufgeschoben, bis die Antriebswelle 6 am Schlitzende, d.h. in der axialen Aufnahmeöffnung 13 angeordnet ist. Anschließend wird die Schleuderscheibe 2 auf der Antriebswelle 6 gedreht, um die Bolzen 16 auf die Löcher 17 auszurichten und in letztere einzusetzen. Sobald dies geschehen ist, liegt die Schleuderscheibe 2 unmittelbar auf dem Flansch 11 auf und kann mittels der Federstecker 18 auf diesem gesichert werden.

Nach Abnahme der Schleuderscheiben 2 von den Flanschen 11, welcher Vorgang in umgekehrter Reihenfolge geschieht, können erstere gegen Schleuderscheiben anderer Bauart, beispielsweise gegen Grenzstreu- oder Breitstreu-Schleuderscheiben, ausgetauscht oder ein Abdrehvorgang durchgeführt werden. Infolge der entfernten Schleuderscheiben 2 werden die während des Abdrehvorganges aus der entsprechenden Auslauföffnung 5 herausfallenden Düngemittelpartikel nicht mehr seitlich beschleunigt, sondern fallen senkrecht herunter, so daß sie von einem einfach aufgehängten Behälter, für den ebenfalls aufgrund der entfernten Schleuderscheiben 2 ausreichend Platz vorhanden ist, aufgefangen werden können.

In Fig. 3 sind Schleuderscheiben 19 einer anderen Ausführung im Vergleich zur Fig. 2 dargstellt. Alle anderen Bauteile sind gleich und weisen deshalb auch die gleichen Bezugszeichen auf. Die Schleuderscheiben 19 sind durch Ausbildung von je zwei radial verlaufenden randoffenen Schlitzen 20 in zwei gleiche Hälften geteilt. Die Schlitze 20 verlaufen mit geringem Abstand parallel zu einer gedachten Durchmesserlinie der Scheibe. Sie sind in Drehrichtung 15 bzw. 15' der Schleuderscheibe einem Wurfelement 3 gegenüber nachlaufend, und zwar unmittelbar anschließend an das Wurfelement, engeordnet. Die Schleuderscheiben 19 sind ebenso wie die Schleuderscheiben 2 mittels Schnellverschlüssen 12 leicht lösbar an den Flanschen 11 drehfest angebracht. Im Unterschied zu den Schleuderscheiben 2 erfolgt diese Anbringung jedoch mit vier Schnellverschlüssen 12 pro Schleuderscheibe 19. Selbstverständlich können auch die Schleuderscheiben 2 mit vier oder mehr Schnellverschlüssen 12 befestigt werden. Wie in Fig. 3 gezeigt, weisen die Schlitze 20 im montierten Zustand der Schleuderscheiben 19 nur eine sehr geringe Breite auf, die sogar nahezu Null betragen kann. Beim Auswechseln der Schleuderscheiben 19 werden deren Hälften in beliebiger Richtung seitlich auf die Flansche 11 aufgeschoben bzw. von diesen abgezogen. Ansonsten werden sie wie die Schleuderscheiben 2 ausgewechselt. Es ist auch möglich, lediglich jeweils eine Hälfte der Schleuderscheiben 19 gegen Teile von Schleuderscheiben anderer Bauart auszuwechseln.

## Patentansprüche

1. Schleuderstreuer, insbesondere zum Ausbringen von Düngemitteln, dessen angetriebene Streuvorrichtung unterhalb einerAuslauföffnung eines Vorratsbehälters angeordnet ist und zwei auswechselbar mit einer Antriebswelle verbundene, mit Wurfelementen ausgestattete Schleuderscheiben mit einer axialen Aufnahmeöffnung für die Antriebswellen aufweist, wobei die Schleuderscheiben (2, 19) zum seitlichen Aufschieben auf die oder Abnehmen von der Antriebswelle (6) zumindestens einen von ihrer axialen Aufnahmeöffnung ausgehenden randoffenen Schlitz (14, 20) aufweisen,
dadurch gekennzeichnet,
daß jeder Schlitz in Drehrichtung der Schleuderscheibe (2, 19) einem Wurfelement (3) gegenüber nachlaufend und unmittelbar anschließend an das Wurfelement angeordnet ist und daß die Schleuderscheiben (2, 19) mit Hilfe von Schnellverschlüssen (12) leicht lösbar an Flanschen (11) der Naben (10) der Antriebswellen (6) befestigt sind.

2. Schleuderstreuer nach Anspruch 1,
dadurch gekennzeichnet,
daß die Schleuderscheibe (19) durch Ausbildung zweier randoffener Schlitze (20) zweigeteilt ist.

3. Schleuderstreuer nach Anspruch 1 oder 2,
dadurch gekennzeichnet,
daß jeder Schlitz (14, 20) sich in radialer Richtung erstreckt.

4. Anspruch 4 Schleuderstreuer nach Anspruch 1,
dadurch gekennzeichnet,
daß die Schnellverschlüsse der beiden Schleuderscheiben beziehungsweise der Flansch jeweils derart angeordnet sind, daß nur die jeweils zugehörige Schleuderscheibe auf dem entsprechenden Flansch befestigt ist.

## Claims

1. Centrifugal broadcaster, more especially for distributing fertilizers, the driven broadcasting means of said broadcaster being disposed beneath a discharge aperture in a hopper and having two centrifugal discs, which are interchangeably connected to a drive shaft, are provided with throwing elements and have an axial receiving opening for the drive shafts, wherein, for the lateral displacement onto the drive shaft (6) or removal therefrom, the centrifugal discs (2,19) are provided with at least one slot (14, 20), which extends from their axial receiving opening and has an open edge, characterised in that, when viewed in the direction of rotation of the centrifugal disc (2, 19), each slot is disposed downstream of a throwing element (3) and immediately adjacent the throwing element, and in that the centrifugal discs (2, 19) are mounted in an easily detachable manner on flanges (11) of the hubs (10) of the drive shafts (6) by means of quick-release closures (12).

2. Centrifugal broadcaster according to claim 1, characterised in that the centrigual disc (19) is divided into two by the provision of two slots (20) with open edges.

3. Centrifugal broadcaster according to claim 1 or 2, characterised in that each slot (14,20) extends in a radial direction.

4. Centrifugal broadcaster according to claim 1, characterised in that the quick-release closures of the two centrifugal discs, as well as the flange, are each disposed in such a manner that only the respectively associated centrifugal disc is mounted on the corresponding flange.

## Revendications

1. Distributeur centrifuge, notamment pour la distribution d'engrais, dont le dispositif distributeur entraîné est placé en-dessous d'un orifice de sortie d'une trémie d'alimentation et présentant deux disques distributeurs échangeables reliés à un arbre d'entraînement, ces disques d'épandage équipés d'éléments d'éjection, ayant chacun un orifice de réception axial pour l'arbre d'entraînement, les disques distributeurs (2, 19), ayant au moins une fente (14, 20) partant de leur orifice de réception axial (13) ouverte jusqu'au bord pour engager ou enlever latéralement le disque par rapport à l'arbre d'entraînement, caractérisé en ce que, vue dans le sens de rotation (15,15') des disques distributeurs (2, 19), chaque fente (14, 20) est en aval d'un élément éjecteur (3) et de manière directement adjacente à un élément éjecteur (3), et en ce que les disques distributeurs (2, 19) sont fixés de manière facilement détachable de la bride (11) du moyeu (10) de l'arbre d'entrai- nement (6) par des moyens de liaison rapide (12).

2. Distributeur centrifuge selon la revendication 1, caractérisé en ce que le disque distributeur (19) est, par construction, séparé en deux par des fentes à deux ouvertures ouvrant sur les côtés (20).

3. Distributeur centrifuge selon l'une des revendications 1 ou 2, caractérisé en ce que chaque fente (14, 20) s'étend dans la direction radiale.

4. Distributeur centrifuge selon la revendication 1, caractérisé en ce que les moyens de liaison rapide des deux disques de distribution ou de la bride sont respectivement montés chaque fois de cette façon, de manière à ce que seul le disque distributeur approprié peut être fixé à la bride correspondante.
